(19) Europäisches Patentamt
European Patent Office
Office européen des brevets

(11) EP 1 375 618 A1

(12) EUROPEAN PATENT APPLICATION

(43) Date of publication:
02.01.2004 Bulletin 2004/01

(51) Int Cl.[7]: **C09J 4/06**, C08F 290/06, C09J 175/16, C08G 18/28

(21) Application number: **02013605.7**

(22) Date of filing: **19.06.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **3M Innovative Properties Company**
**St. Paul, Minnesota 55133-3427 (US)**

(72) Inventors:
- **Graichen, Andreas**
**40721 Hilden (DE)**
- **Goeb, Siegfried**
**47877 Willich (DE)**

(74) Representative: **Wilhelm, Stefan M.**
**Office of Intellectual Property Counsel,**
**c/o 3M Deutschland GmbH,**
**Carl-Schurz-Strasse 1**
**41453 Neuss (DE)**

# (54) Radiation-curable, solvent-free and printable precursor of an adhesive

(57) The present invention relates to a free-radically radiation-curable, solvent-free and printable precursor of an adhesive, the precursor comprising

(i) 15-60 wt.% of one or more mono(meth)acrylate functional oligomer compounds at least one of said oligomer compounds comprising at least one urethane bond,

(ii) 5-8 5 wt.% of one or more poly(meth)acrylate functional oligomer compounds,

(iii) 5-45 wt.% of one or more monomer compounds comprising one ethylenically unsaturated group,

(iv) 0-10 wt.% of one or more monomer compounds comprising two or more ethylenically unsaturated groups, and

(v) an effective amount of one or more free radical photoinitiators,

wherein the percentages which are percentages by weight with respect to the mass of the precursor, are selected so that the precursor has a dynamic viscosity at 20 °C and at a shear rate of 100 $s^{-1}$ of between 300 to 15,000 mPa·s.

EP 1 375 618 A1

## Description

Field of the invention

The present invention relates to a free-radically radiation-curable, solvent-free and printable precursor of an adhesive. The present invention also refers to the adhesive obtainable by UV-curing of said precursor and to a method of assembling a first substrate to a second substrate by using said precursor.

Background of the invention

Pressure-sensitive adhesives can be applied to a substrate as pre-cured adhesive tapes which may be die-cut to the required shape. While this technique is convenient for many technical applications and does, in particular, usually not require any in-situ curing step, it may be disadvantageous in other technical applications for the following reasons:

- Two-sided adhesive tapes usually require the use of one or more release liners which have to be discarded upon application of the adhesive tape. When die-cutting the adhesive tape to a desired shape, the excess tape has to be discarded, as well.
- Especially in the electronics industry the shapes of the substrates to be adhered, tend to get smaller and more complicated so that the die-cutting of the adhesive tape tends to become more difficult and technically demanding.

In view of this it has been suggested to use liquid adhesives which can be applied, for example, by a printing process. US 6,180,200 B1 discloses, for example, a radiation-curable hybrid free radical and cationic pressure-sensitive adhesive composition which can be applied by screen printing and is used for bonding digital versatile disks (DVD). The composition comprises acrylate oligomers and, optionally, acrylate monomers which are copolymerized with a cationic epoxy resin system. The acrylate component of the composition is cured by UV irradiation. Then the two DVD halves are pressed together and the epoxy component of the composition continues to cure cationically. The "dark" curing time of the epoxy component typically is 24 h which is, however, not acceptable for many applications.

JP 2001/226,645-A discloses a composition comprising an acrylate oligomer, an acrylate monomer and a photoinitiator. The composition has a viscosity of between 300 to 600 mPa·s so that it can be applied, for example, by gravure offset printing. Upon curing, the composition provides a polymer material which is slightly self-adhering but easily separable from each other. The composition of JP '645 is not suited for providing a strong bond between two substrates, for example.

US 4,174,307 and US 4,305,854 disclose a UV radiation room temperature curable monomeric substantially water-insoluble composition comprising polyurethane compounds having two or more olefinically unsaturated groups, and a photoinitiator. The compositions can be printed and used, for example, as vehicles for printing inks. The shear values of the cured polymers do not meet all practical requirements, however.

The European patent application entitled "Free-radically radiation-curable, solvent-free and printable precursor of a pressure-sensitive adhesive" which has been filed by the present Applicant on the day of the present patent application, discloses the precursor of a pressure sensitive adhesive comprising

(i) 30-75 wt.% of one or more mono(meth)acrylate funcional oligomer compounds at least one of said oligomer compounds comprising at least one urethane bond,

(ii) 0-15 wt.% of one or more poly(meth)acrylate functional oligomer compounds,

(iii) 5-45 wt.% of one or more monomer compounds comprising one ethylenically unsaturated group,

(iv) 0-5 wt.% of one or more monomer compounds comprising two or more ethylenically unsaturated groups, and

(v) an effective amount of one or more free radical photoinitiators,

wherein the percentages which are percentages by weight with respect to the mass of the precursor, are selected so that the precursor has a dynamic viscosity at 20 °C and at a shear rate of 100 $s^{-1}$ of between 300 to 15,000 mPa·s.

The pressure-sensitive adhesives obtained by curing of such precursors exhibit, for example, high T-peel values and high values of static shear from acrylonitrile butadiene-styrene (ABS). The pressure-sensitive adhesive is also characterized by advantageous values of the shear adhesion failure temperature (SAFT) from various substrates

including stainless steel.

For high-end applications in the electronics industry it is, however, required that SAFT of a bonded assembly of, for example, two PET films is above 70 °C, more preferably above 80 °C and especially preferably above 90 °C. This requirement may not always be fulfilled by all precursors and the resulting pressure-sensitive adhesives claimed in the co-pending patent application of the present Applicant.

It was therefore an object of the present invention to provide a free-radically radiation-curable solvent-free precursor of an adhesive which can be applied by printing techniques such as, for example, screen-printing or flexo-printing and which upon curing, when used to assemble two substrates to each other, provides, in particular, a high performance bond with an advantageous temperature stability and/or a high shear adhesion failure temperatures (SAFT) of an assembly bonded by such cured precursor. Other objects of the present invention can be taken from the following detailed specification of the invention.

Brief description of the invention

The present invention relates to a free-radically radiation-curable, solvent-free and printable precursor of a pressure-sensitive adhesive, the precursor comprising

(i) 10-60 wt.% of one or more mono(meth)acrylate funcional oligomer compounds at least one of said oligomer compounds comprising at least one urethane unit,

(ii) 5-85 wt.% of one or more poly(meth)acrylate functional oligomer compounds,

(iii) 5-45 wt.% of one or more monomer compounds comprising one ethylenically unsaturated group,

(iv) 0-10 wt.% of one or more monomer compounds comprising two or more ethylenically unsaturated groups, and

(v) an effective amount of one or more free radical photoinitiators,

wherein the percentages which are percentages by weight with respect to the mass of the precursor, are selected so that the precursor has a dynamic viscosity at 20 °C and at a shear rate of 100 $s^{-1}$ of between 300 to 15,000 mPa·s.

The present invention furthermore refers to a method of adhering a substrate being at least partially (or partly) transparent to actinic irradiation and/or UV irradiation to another substrate comprising the steps of

(i) applying the precursor according to the present invention to one of the substrates,

(ii) subjecting the precursor to actinic irradiation and/or UV irradiation using a radiation dose so that the precursor is cured only partly,

(iii) interrupting the treatment with actinic and/or UV irradiation and assembling the two substrates against each other with the partly cured precursor being sandwiched between the two substrates, and

(iv) subjecting the assembly to actinic and/or UV irradiation through the substrate being at least partially transparent to actinic irradiation and/or UV irradiation using a radiation dose sufficiently high to fully cure the precursor.

Detailed description of the invention

The term oligomer compounds as used above and below refers to relatively low molecular weight polymeric compounds having a weight average molecular weight $M_w$ of between 1,000 to 35,000 and, more preferably between 1,000 and 30,000. Oligomeric componds are typically liquid at room temperature and ambient pressure whereby the dynamic viscosity (measured as described below) is preferably less than 500 Pa·s and more preferably less than 200 Pa·s at 20 °C and a shear rate of $s^{-1}$.

The term monomer compounds as used above and below refers to low weight building units able to participate in a polymerisation reaction to form a polymeric material. The weight average molecular weight $M_w$ of monomer compounds is preferably less than 1,000 and more preferably less than 750. Ethylenically unsaturated monomers are able to form a polymer by reacting with themselves via a free-radical polymerization mechanism.

In case of oligomers, the term "mono(meth)aycrylate functional" as used above and below refers to oligomers having an average mono(methacrylate) functionality of between 0.7 and 1.3, more preferably of between 0.8 and 1.2 and especially preferably of between 0.9 and 1.1. In case of oligomers, the term "poly(meth)acrylate functional" as

used above and below refers to oligomers having an average acrylate functionality of at least 1.5 and more preferably of at least 1.8. The average (meth)acrylate functionality of such poly(meth)acrylate functional oligomers preferably is lower than 5, more preferably lower than 3 and especially preferably lower than 2.5.

Above and below, a substrate is denoted as at least partially (or partly) transparent to actinic irradiation and/or UV-irradiation if the ratio of the intensity of such actinic irradiation and/or UV irradiation after passing the at least partially transparent substrate, is at least 50 % and more preferably at least 60 % with respect to the intensity of the impinging irradiation.

The free-radically radiation-curable, solvent-free and printable precursor of the present invention comprises as a first component (i) one or more monomethacrylate functional oligomer compounds wherein at least one of said oligomer compounds comprises at least one urethane bond

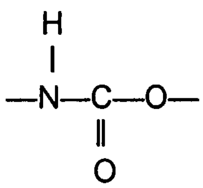

The mono(meth)acrylate functional oligomers useful in the present invention can be branched or essentially linear, and the (meth)acrylate functional group or groups, respectively, can be terminal groups and/or pendant side groups bonded to the oligomer backbone. The composition of the oligomeric backbone is not critical and it can be based, for example, on a polyether, polyester including polycarbonate, polyolefin, or on a copolymer thereof. It is also possible that the oligomeric backbone comprises one or more oligomeric blocks such as, for example, polyether or polyester blocks which are connected to each other, for example, by urethane bonds.

The oligomeric backbone of the mono(meth)acrylate functional oligomers of component (i) is preferably selected so that the glass transition temperature of a homopolymer obtained by polymerising such oligomers is between -30 and 100 °C and more preferably between -30 and 70 °C.

The weight average molecular weight $M_w$ of the mono(meth)acrylate functional oligomer compounds of component (i) is preferably between 1,500 and 35,000 and more preferably between 3,000 and 30,000.

Mono(meth)acrylate functional oligomers can be prepared by known synthetic methods.

Mono(meth)acrylate functional polyether oligomers can be obtained, for example, by polymerising cyclic ether monomers such as, for example, oxiranes such as ethylene oxide or propylene oxide or tetrahydrofurane using α,ω-hydroxy-(meth)acrylate functional compounds such as HEA or HEMA (2-hydroxyethyl(meth)acrylate) as a starter or termination compound. The reaction provides an α,ω-hydroxy-mono(meth)acrylate functional polyether oligomer compound.

Mono(meth)acrylate functional polyester oligomers can be obtained, for example, by polymerizing cyclic esters such as, for example, ε-caprolactone or pivalolactone using α,ω-hydroxy-(meth)acrylate functional compounds such as HEA or HEMA as a starter or termination compound. The reaction provides an α,ω-hydroxy-mono(meth)acrylate functional polyester oligomer compound.

The methods providing mono(meth)acrylate functional oligomers specified above are intended to illustrate the invention without limiting it. The person skilled in the art can easily identify and apply other synthetic methods for preparing mono(meth)acrylate functional oligomers comprising a polyether, a polyester, a polyether/polyester or another backbone.

At least one of the mono(meth)acrylate functional oligomers comprises at least one and more preferably at least two urethane bonds.

Mono(meth)acrylate functional oligomers comprising at least one urethane bond can be obtained by reacting a monohydroxy functional oligomer compound in a first step (a) with an excess of an diisocyanate compound.

Step (a):

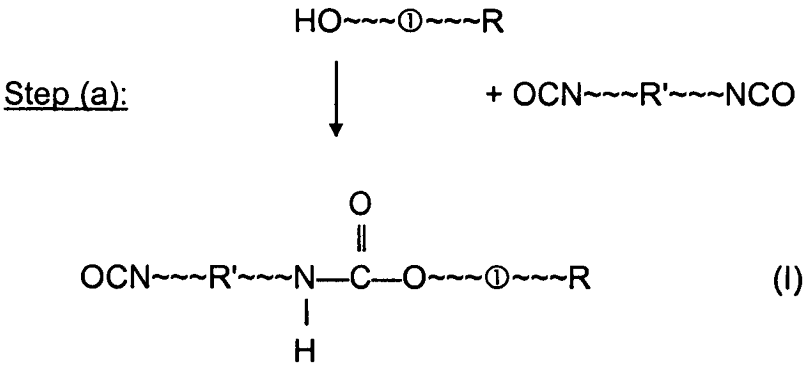

(I)

In the reaction step (a), ① and R' schematically denote the backbone or molecular structure, respectively, of the monohydroxy functional oligomer compound and the diisocyanate compound. The monohydroxy functional oligomer compound can be, for example, a monohydroxy functional polyether or polyester oligomer, respectively.

Monohydroxy functional polyether oligomers can be obtained, for example, by reacting cylic ethers such as, for example, oxiranes or tetrahydrofuranes with an alcohol compound R-OH as a starter or termination compound. This can be exemplified as follows:

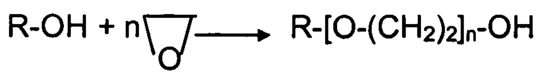

wherein R is, for example, an optionally substituted alkyl group.

Similarly, monohydroxy functional polyester oligomers can be obtained, for example, by reacting cyclic esters such as, for example, ε-caprolactone or pivalolactone with an alcohol compound as a starter or termination compound. Monohydroxy functional polyester oligomers can also be obtained, for example, by an esterification or trans-esterification respectively, of α,ω-hydroxy-carbonic acid functional polyester oligomers.

The diisocyanate compounds used in step (a) preferably comprise 1 - 5, especially 1 - 2 diisocyanate compounds which are preferably selected from a group of diisocyanates comprising 1,4-butylene diisocyanate, 1,6-hexamethylene diisocyanate, cyclopentylene-1,3-diisocyanate, 4,4'-dicyclohexylmethane diisocyanate, isophorone diisocyanate, cyclohexene-1,4-diisocyanate, 2,4-tolylene diisocyanate, 2,6-tolylene diisocyanate, 4,4'-methylene bis(phenyl isocyanate), 2,2-diphenylpropane-4,4'-diisocyanate, p-phenylene diisocyanate, m-phenylene diisocyanate, xylene diisocyanate, 1,4-naphthylene diisocyanate, 1,5-naphthylene diisocyanate 4,4'-diphenyl diisocyanate, azobenzene-4,4'-diisocyanate, m- or p-tetramethylxylene diisocyanate and 1-chlorobenzene-2,4-diisocyanate.

The mono-isocyanate funtional oligomer compound of formula I thus obtained is then reacted in step (b) with an α,ω-hydroxy-(meth)acrylate functional compound such as, for example, HEA or HEMA to provide a mono(meth) acrylate functional oligomer compound of formula II useful in component (i) of the precursor of the present invention:

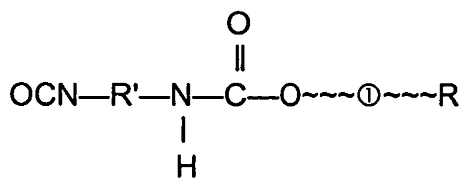

(I)

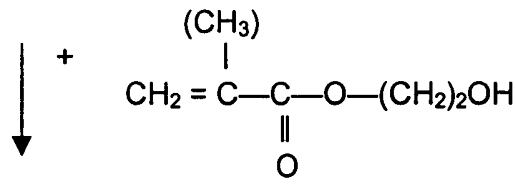

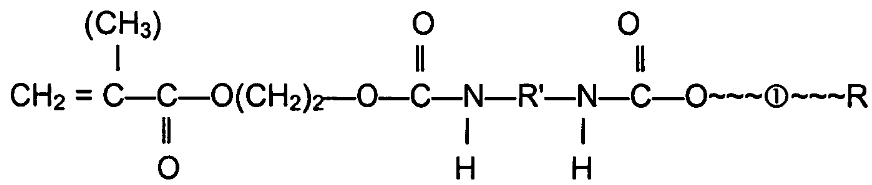

(II)

The (meth)acrylate functionality of compound II thus obtained is essentially 1.

Alternatively, it is also possible to prepare mono(meth)acrylate functional oligomer compounds by reacting a monohydroxy functional oligomer such as, for example, a monohydroxy functional polyether oligomer or a monohydroxy functional polyester oligomer, with an α,ω-isocyanato-(meth)acrylate functional compound such as, for example, isocyanatoethyl(meth)acrylate.

Mono(meth)acrylate functional oligomers comprising at least one urethane bond can also be obtained, for example, by

(a)' reacting one or more α,ω-dihydroxy oligomer compounds with an excess of one or more diisocyanate compounds so that one or more adducts of an α,ω-dihydroxy oligomer compound with two diisocyanate compounds are formed whereas the polyurethane polymerization side reaction is effectively suppressed,

(b)' reacting an excess of the resulting adducts with an α,ω-hydroxy(meth)acrylate functional compound such as, for example, HEA or HEMA, and

(c)' reacting the reaction product of step (b)' with one or more monohydroxy functional compounds such as, for example, alcohols to provide a mono(meth)acrylate functional oligomer compound of formula III useful in component (i) of the present invention.

The α,ω-dihydroxy oligomer compounds used in step (a) are preferably selected from a group comprising α, ω-dihydroxy polyester oligomers (including α,ω-dihydroxy polycarbonate oligomers) and α,ω-dihydroxy polyether oligomers which each have hydroxy groups at both ends. It is also possible but less preferred to use dihydroxy functional oligomer compounds with two non-terminal hydroxyl groups.

The average molecular weight of the dihydroxy functional oligomer compound is preferably selected so that the desired weight average molecular weight $M_w$ of the resulting monoacrylate functional oligomer is obtained. The weight average molecular weight of the the dihydroxy functional oligomer compounds preferably is between 800 - 34,000 and more preferably between 1,000 and 30,000.

It is possible to use in step (a)' more than one dihydroxy functional oligomer compound although it is usually preferred to use between 1 - 5 and more preferably between 1 - 3 of the dihydroxy functional oligomer compounds. A

smaller amount of one or more tri- or higher-hydroxy functional oligomer compounds may be used in addition to the the dihydroxy functional oligomer compounds although this is usually not preferred because it makes it more difficult to control the functionality of the resulting mono(meth)acrylate functional oligomer.

The di-hydroxy functional polyester oligomer compounds are preferably prepared from one or more alcohols containing at least 2 hydroxyl groups and one or more dicarboxylic acids. Preferred examples of difunctional alcohols include ethylene glycol, 1,3- and 1,2-propylene-glycol, 1,4-butanediol, 1,3-butanediol, 2-methylpentanediol, 1,5-pentanediol, 1,6-pentanediol and 1,12-dodecanediol. The dicarboxylic acids are preferably selected from a group comprising adipic, succinic, sebacic, suberic, methyladipic, glutaric, pimelic, azelaic, thiodipropionic, citraconic and aromatic dicarboxylic acids like, for example, terephthalic and phthalic acid. Furthermore, hydrocarboxylic acids, lactones and carbonates such as, for example, ε-caprolactone and 3-hydroxybutyric acid, may be used for the preparation of polyester diols.

The di-hydroxy functional polyether oligomer compounds preferably are condensation products of one or more alkylene glycols such as, for example, ethylene glycol, 1,2- or 1,3-propylene glycol, 1,4-butanediol, and 1,5-pentanediol. Preferred di-hydroxy functional polyether oligomer compounds are furthermore obtained from tetrahydrofurane, ethylene oxide and/or propylene oxide.

The diisocyanate compounds exemplified above in connection with step (a) can be used in step (a)' as well.

The diisocyanate compounds are used in step (a)' in excess with respect to the di-hydroxy functional oligomer compounds so that the polyurethane polymerization side reaction is effectively suppressed. Preferably, at least 2, and more preferably at least 5 mol and especially preferably at least 8 mol of one or more diisocyanate compounds are used per mol of one or more α,ω-dihydroxy oligomer compounds. The reaction of step (a) can be schematically illustrated as follows:

Step (a)':

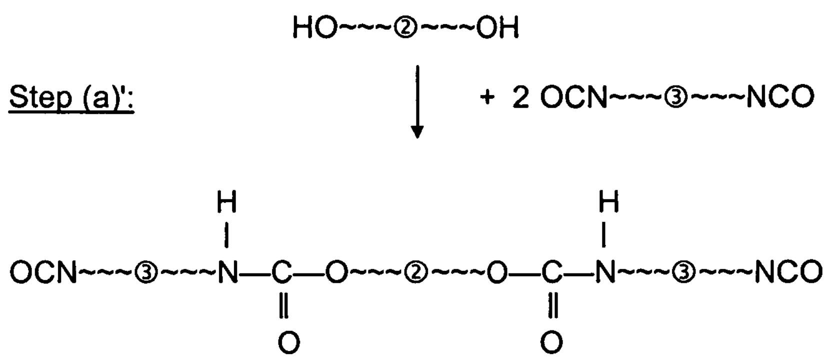

wherein ~~~② ~~~ and ~~~③ ~~~ schematically denote the backbone or molecular structure, respectively, of the α,ω-dihydroxy oligomer compound and the diisocyanate compound, respectively.

An excess of the adduct obtained in step (a)' is reacted in step (b)' with an α,ω-hydroxy-(meth)acrylate functional compound such as, for example, HEA or HEMA. Other suitable α,ω-hydroxy-(meth)acrylete functional monomers include, for example, hydroxypropyl(meth)acrylate and hydroxybutyl(meth)acrylate.

The reaction of step (b)' can be schematically be illustrated as follows:

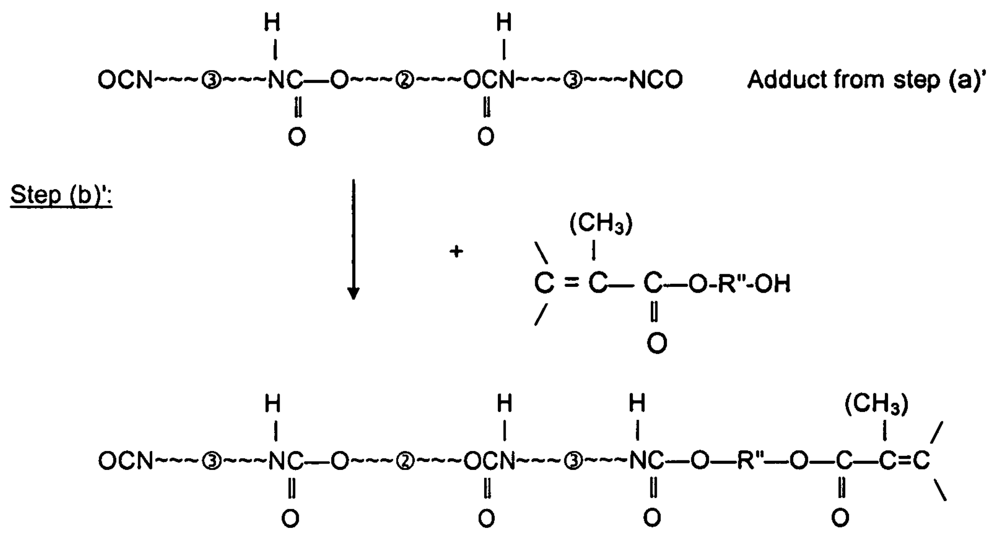


wherein R" is, for example, an optionally substituted alkylene group.

In a final step (c)', the reaction product of step (b)' is reacted with a monohydroxy functional monomer such as, for example, an alcohol compound to provide the mono(meth)acrylate functional oligomer compound of formula III useful in component (i) of the present invention. This reaction step can be schematically visualised as follows:

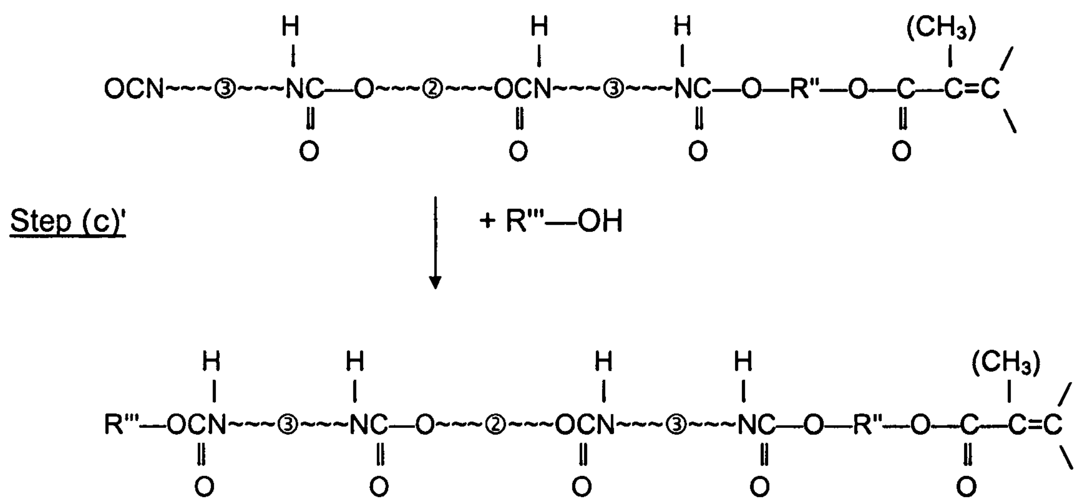


(III)

R''' is, for example, an optionally substitued alkyl group.

The person skilled in the art can easily select the reaction conditions so that the (meth)acrylate functionality of the compound of formula III is between 0.9 and 1.3 and, more preferably, between 0.9 and 1.2

The specific reaction mechanisms described above and the specific examples of α,ω-dihydroxy oligomer compounds, diisocyanates, α,ω-hydroxy mono(meth)acrylate functional monomer compounds and (mono)hydroxy-functional monomer compounds disclosed above, are to illustrate the present invention without limiting it. The person skilled in the art can easily and without any inventive effort use reaction methods and compounds other than those exemplified above.

Mono(meth)acrylate functional oligomers comprising at least one urethane bond are commercially available, for example, from Rahn AG, Zurich, Switzerland. GENOMER 4188 is a mixture consisting of 80 wt.% of a monoacrylate-functional polyester based oligomer comprising at least one urethane bond, and 20 wt.% of 2-ethylhexyl-acrylate; the oligomer comprised by GENOMER 4188 has a weight average molecular weight $M_w$ of about 8,000 and the average acrylate functionality is 1 ± 0.1.

The mono(meth)acrylate functional oligomer having at least one urethane bond, preferably has at least 2 and more preferably at least 4 urethane bonds.

The component (i) of the precursor according to the present invention preferably comprises between 1 - 5, more preferably between 1 - 4 and especially preferably between 1 - 3 of one or more mono(meth)acrylate functional oligomers. In a preferred embodiment of the precursor of the present invention the mass of one or more mono(meth) acrylate functional oligomers having at least one urethane bond with respect to the mass of component (i) is between 60 - 100 % and more preferably between 80 - 100 %.

Component (i) of the precursor of the present invention comprises between 10-60 wt.% with respect to the mass of the precursor of one or more mono(meth)acrylate functional oligomer compounds wherein at least one of said oligomer compounds comprises at least one urethane bond. The viscosity of the precursor tends to become too high if the amount of component (i) with respect to the mass of the precursor exceeds 60 wt.% so that the precursor tends to become non-printable. Also, the high temperature performance of a bond between two substrates obtained, e.g., by using the closed-face curing method described below, tends to deteriorate. If the amount of component (i) with respect to the mass of the precursor is less than 10 wt.%. the viscosity of the precursor tends to be too low.

The free-radically radiation-curable, solvent-free and printable precursor of the present invention comprises as a second component (ii) one or more poly(meth)acrylate functional oligomer compounds in an amount of between 5 - 85 wt.% with respect to the mass of the precursor.

The poly(meth)acrylate functional oligomers useful in the present invention can be branched or essentially linear, and the (meth)acrylate functional groups can be terminal groups and/or pendant side groups bonded to the polymer backbone.

The compositions of the oligomer backbone is not critical and it can be based, for example, on a polyether, polyester, polycarbonate, polyolefin or on a copolymer thereof. It is also possible that the oligomeric backbone comprises one or more oligomeric blocks which are connected to each other, for example, by urethane bonds.

The oligomeric backbone of the poly(meth)acrylate functional oligomers of component (ii) is preferably selected so that the glass transition temperature of a homopolymer obtained by polymerising such oligomers, is between - 30° and 100°C and more preferably between - 30 and 70°C.

The average molecular weight of the poly(meth)acrylate functional oligomer compounds of component (ii) is preferably between 1,000 and 35,000 and more preferably between 1,000 and 30,000.

Poly(meth)acrylate functional oligomers can be obtained by known synthetic methods. Di(meth)acrylate functional polyester oligomers can be obtained, for example, by reacting $\alpha,\omega$-dihydroxy functional polyester oligomers with diisocyanates and subsequently with $\alpha,\omega$-hydroxy-(meth)acrylate functional compounds such as, for example, HEA or HEMA. Di(meth)acrylate functional polyester oligomers can also be obtained by reacting $\alpha,\omega$-dihydroxy functional polyester oligomers with $\alpha,\omega$-isocyanato-(meth)acrylate functional compounds such as, for example, isocyanatoethyl (meth)acrylate.

At least one of the poly(meth)acrylate functional oligomers preferably comprises at least one, more preferably at least two and especially preferably at least four urethane bonds.

Di(meth)acrylate functional oligomers comprising at least one urethane bond can be obtained, for example, by reacting the adduct from step (a)' above with an excess of one or more $\alpha,\omega$-hydroxy-(meth)acrylate functional compounds such as, for example, HEA or HEMA. Methods of manufacturing poly(meth)acrylate functional urethane oligomers are also disclosed, for example, in US 5,847,021.

Poly(meth)acrylate functional oligomers comprising at least one urethane bond, are commercially available, for example, from Sartomer Co., Exton, PA, U. S. A., as Sartomer CN 966 or Sartomer CV 965 and from Radcure Co., Louisville, KY, U. S. A., as Ebecryl 230. Poly(meth)acrylate functional oligomers comprising at least one urethane bond, are also available from Rahn AG, Zurich, Switzerland under the GENOMER trade designation. GENOMER 4269, for example, which is used in the Examples described below is a mixture comprising 80 wt.% of a diacrylate functional polyester urethane oligomer.

The precursor of the present invention comprises at least 5 wt.%, preferably at least 15 wt.%, more preferably at least 17.5 wt.% and especially preferably between 20-75 wt.% with respect to the mass of the precursor of one or more poly(meth)acrylate functional oligomer compounds. Due to the high mass ratio of one or more poly(meth)acrylate functional oligomer compounds of component (ii), the fully cured precursor tends to exhibit elastic but no viscoelastic properties, i.e. the fully cured precursor tends to be not a pressure-sensitive adhesive. The fully cured precursor of the present invention also typically exhibits no tack. The tack can be quantitatively assessed by the Polyken™ probe tack test described in the test section below. Fully cured precursors having a tack of less than 100 g and, more preferably of less than 50 g are experienced as essentially tack-free. If the mass of component (ii) is higher than 85 wt.% with respect to the mass of the precursor, the viscosity of the precursor tends to become too high so that the printability of the precursor would be adversely affected. For a mass of component (ii) of less than 5 wt.% with respect to the mass of the precursor, the high temperature performance of a bond between two substrates obtained, e.g., by using the closed-face curing method described below, tends to deteriorate.

In a preferred embodiment the ratio of the mass of one or more poly(meth)acrylate functional oligomers having at least one, more preferably at least two and especially preferably at least four urethane bonds, with respect to the total mass of component (ii) preferably is at least 60 %, more preferably at least 80 % and especially preferably at least 90 %.

The free-radically radiation-curable, solvent-free and printable precursor of the present invention comprises as a third component (iii) one or more monomer compounds comprising one ethylenically unsaturated group

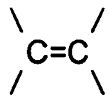

in an amount of between 5 - 45 wt.%. Examples of suitable ethylenically unsaturated groups include vinyl, vinylene, allyl and, in particular, (meth)acrylate groups.

Compounds comprising one ethylenically unsaturated group which are useful in the present invention can be distinguished in view of their polarity or in view of the glass transition temperature of a homopolymer obtained by radically polymerising the respective monomer.

The term polar monomers includes both moderately polar and strongly polar monomers. Polarity (i. e., hydrogen-bonding ability) is frequently described by the use of terms such as "strongly", "moderately" and "poorly". References describing these and other solubility terms include Paint Testing Manual, 3rd ed., G. G. Seward, Ed., American Society for Testing and Materials, Philadelphia, Pennsylvania, and "A Three-Dimensional Approach to Solubility", Journal of Paint Technology, Vol. 38, No. 496, pp. 269- 280.

Suitable examples for poorly polar monomers include, for example, linear or branched monofunctional unsaturated acrylates or methacrylates of non-tertiary alkyl alcohols, the alkyl groups of which have from 4 to 15 and, in particular, from 4 to 14 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate, dodecyl acrylate, ethoxy-ethoxyethylacrylate and 2-acrylic acid -2-((butylamino) carbonyl) oxyethyl ester. Preferred lower acrylate and methacrylate esters include isooctyl acrylate, n-butyl acrylate, 2-ethylhexyl acrylate, isononyl acrylate, ethoxy-ethoxyethylacrylate and dodecyl acrylate.

Moderately polar and strongly polar monomers which are suitable in the present invention include, for example, acrylic acid, methacrylic acid, acrylamides, N-vinyl lactams such as, for example, N-vinyl pyrrolidone or N-vinyl caprolactam, acrylonitrile, acryloylmorpholine and dimethyl amino-propyl methacrylate.

Low $T_G$ monomers having one ethylenically unsaturated group and a glass transition temperature of the corresponding homopolymer of less than 0 °C which are suitable in the present invention include, for example, n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfurylacrylate, ethoxy-ethoxyethyl acrylate and ethoxylated-nonylacrylate. Especially preferred are 2-ethyl-hexylacrylate, ethoxy-ethoxyethyl acrylate, tridecylacrylate and ethoxylated nonylacrylate.

High $T_G$-monomers having one ethylenically unsaturated group and a glass transition temperature of the corresponding homopolymer of 50 °C or more which are suitable in the present invention, include, for example, N-vinylpyrrolidone, N-vinyl caprolactam, isobornyl acrylate, acryloylmorpholine, isobornylmethacrylate, phenoxyethylacrylate, phenoxyethylmethacrylate, methylmethacrylate and acrylamide. Especially preferred are N-vinylpyrrolidone, and acryloylmorpholine.

The amount of strongly and moderately polar monomer compounds comprising one ethylenically unsaturated group with respect to the mass of the compounds of component (iii) preferably is at least 10 wt.%, more preferably at least 12.5 wt.% and especially preferably at least 15 wt.% with respect to the mass of the precursor.

The amount of one or more poorly polar monomers comprising one ethylenically unsaturated group with respect to the mass of the precursor is preferably at least 3.5 wt.% and more preferably at least 5.0 wt.%.

In a preferred embodiment of the present invention, the sum of the amounts of the higher (meth)acrylate functional oligomers of component (ii) and the mono (meth)acrylate functional monomers with a $T_G$ of more than 50 °C of component (iii), is at least 20 wt.%, more and preferably at least 25 wt.% and especially preferably at least 30 wt.% with respect to the mass of precursor. If the average (meth)acrylate functionality of the poly(meth)acrylate functional oligomers of component (ii) is higher than 2.5, the sum of the amounts of such higher acrylate functional oligomers and the mono-acrylate functional monomers with a $T_G$ of more than 50 °C, preferably is at least 17.5 wt.% and especially

preferably at least 20 wt.% with respect to the mass of the precursor.

Component (iii) of the precursor of the present invention comprises between 5-45 wt.% with respect to the mass of the precursor of one or more monomer compounds comprising one ethylenically unsaturated group. The viscosity of the precursor tends to become too low if the amount of component (iii) with respect to the mass of the precursor exceeds 45 wt.%. Using a very high percentage of component (iii) of more than 45 wt.% also tends to result in cured precursors which when used as a bond between two substrates obtained, e.g., by using the closed-face curing method described below, tends to exhibit a less advantageous high temperature behaviour. If the amount of component (iii) with respect to the mass of the precursor is less than 5 wt%. the viscosity of the precursor tends to be too high so that the precursor tends to become non-printable.

The free-radically radiation-curable, solvent-free and printable precursor of the present invention comprises as a fourth optional component (iv) one or more monomer compounds comprising two or more ethylenically unsaturated groups

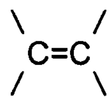

in amount of between 0 - 10 wt.%.

Examples of suitable monomer compounds comprising two or more ethylenically unsaturated groups include $C_2$ - $C_{12}$ hydrocarbondiol diacrylates such as 1,6-hexanediol diacrylate, $C_4$ - $C_{14}$ hydrocarbon divinylethers such as hexanediol divinylether and $C_3$ - $C_{12}$ hydrocarbontriol triacrylates such as trimethylolpropanetriacrylate. Two or higher acrylate functional monomers and, in particular, two- or three acrylate-functional monomers are preferred.

In a preferred embodiment of the present invention, the amount of monomers with an unsaturated ethylene-functionality of two or more and, in particular, with an acrylate functionality of 2 or 3, is between 0-7.5 wt.%. The sum of the amounts of the higher (meth)acrylate functional oligomers of component (ii) and the monomers of component (iv) with an unsaturated ethylene-functionality of two or more, preferably does not exceed 75 wt.% and is more preferably between 20 - 65 wt.% with respect to the mass of the precursor.

Component (iv) of the precursor of the present invention comprises between 0-5 wt.% with respect to the mass of the precursor of one or more monomer compounds comprising two or more ethylenically unsaturated groups. If the mass of component (iv) is higher than 10 wt.% with respect to the mass of the precursor the resulting fully cured precursor tends not to exhibit elastic properties which makes the precursor less suitable for bonding two substrates.

The free-radically radiation-curable, solvent-free and printable precursor of the present invention comprises an effective amount of one or more free radical photoinitiators. Actinic radiation from any source and of any type can be used for the curing of the precursor of the present invention whereby light sources are preferred over e-beam sources. The light can be in the form of parallel rays or divergent beams. Since many photoinitiators generating free radicals, exhibit their absorption maximum in the ultraviolet (UV) range, the light source is preferably selected to emit an effective amount of such radiation. Suitable light sources include carbon arc lamps, mercury vapor lamps, fluorescent lamps comprising ultraviolet light-emitting phosphors, argon glow lamps and photographic flood lamps. Preferred are high-intensity light sources having an intensity of at least 80 $mJ/cm^2$ and more preferably of at least 100 $mJ/cm^2$.

The amount of the free radical photoinitiator compound or compounds is selected in view of the emission characteristic and the intensity of the light source and in view of the spectral sensitivity of the free radical photoinitiators. The amount of the photoinitiators of component (v) with respect to the mass of the precursor preferably is between 0.1 and 15 wt.%, more preferably between 0.2 and 12.5 wt.% and especially preferably between 0.5 and 10 wt.%.

The photoinitiators which are suitable in the present invention include both type I and type II photoinitiators.

Type I photoinitiators are defined to essentially undergo a unimolecular bond cleavage reaction upon irradiation thereby yielding free radicals. Suitable type I photoinitiators are selected from a group consisting of benzoin ethers, benzil ketals, $\alpha$-dialkoxy-acetophenones, $\alpha$-hydroxyalkylphenones and acyl-phosphine oxides. Suitable type I photoinitiators are commercially available, for example, as Esacure KIP 100 from Lamberti Spa, Gallarate, Italy, or as Irgacure 651 from Ciba-Geigy, Lautertal, Germany.

Type II photoinitiators are defined to essentially undergo a bimolecular reaction where the photoinitiators interact in an excited state with a second compound acting as co-initiator, to generate free radicals. Suitable type II photoinitiators are selected from a group comprising benzophenones, thioxanthones and titanocenes. Suitable co-initiators are preferably selected from a group comprising amine functional monomers, oligomers or polymers whereby amino functional monomers and oligomers are preferred. Both primary, secondary and tertiary amines can be used whereby tertiary amines are preferrred. Suitable type II photoinitiators are commercially available, for example, as

Esacure TZT from Lamberti Spa., Gallarate, Italy, or as 2- or 3-methylbenzophenone from Aldrich Co., Milwaukee, WI, U. S. A.

Suitable amine co-initiators are commercially available, for example, as GENOMER 5275 from Rahn AG, Zurich, Switzerland.

The definitions of type I and type II photoinitiators given above, include photoinitiators which for a given composition of the precursor of the present invention undergo a unimolecular or bimolecular reaction, respectively, to a predominant extent of preferably at least 60 %, more preferably at least 75 % and especially preferably at least 85 %.

When subjecting the precursor of the present invention to actinic irradiation and, in particular, to UV irradiation, the precursor is cured via a free-radical polymerisation mechanism. The progress of the free-radical curing reaction can be monitored by measuring the degree to which the unsaturated C-C double bonds in the (meth)acrylic functional group(s) of the oligomer components (i) and (ii), respectively, and in the ethylenically unsaturated group(s) of the monomer components (iii) and (iv), respectively, are consumed as a function of time during irradiation as is detailed in the experimental section below.

Above and below, the precursor of the present invention is termed as "fully cured" when the degree of consumption of the unsaturated C-C double bond in the (meth)acrylate group(s) of the oligomeric compounds and the ethylenically unsaturated group(s) of the monomeric compounds, respectively, of components (i) - (iv), is 90 % or more. The irradiation time required for obtaining a degree of consumption of at least 90 %, is referred to above and below as curing time.

It was found by the present inventors that if the precursor of the present invention is fully cured in one step, the resulting fully cured precursor tends to exhibit elastic but no viscoelastic properties, i.e. the fully cured precursor tends to be not a pressure-sensitive adhesive. It is speculated that this is due to the high cross-link density of the fully cured precursor resulting from the high amounts of one or more poly(meth)acrylate functional oligomer compounds of component (ii) and, optionally, of one or more monomers of component (iv) comprising two or more ethylenically unsaturated groups.

It was further observed that the viscoelastic behaviour and the tack of the fully cured precursor of the present invention tends to decrease with an increasing amount of one or more monomers of component (iii) having a $T_G$ of 50 °C or more.

The above curing method where the precursor is fully cured in one step, is also referred to above and below as "open face" curing method.

It was now surprisingly found by the present inventors that the precursor of the present invention can be used for bonding assemblies wherein such bond exhibits a high performance and, in particular, an advantegeous temperature behaviour when curing the precursor in a two-step method which is also referred to above and below as "closed-face" curing.

In such method the precursor is applied, for example, to the surface of a first substrate and partially cured. To this effect, the dose of irradiation applied to the precursor is only part of the dose required to fully cure the precursor. The dose of the actinic irradiation and, more preferably, of the UV irradiation during the initial partial curing step is preferably selected so that the average extent of consumption of the C-C double bond of the ethylenically unsaturated groups and the (meth)acrylic groups, respectively, preferably is about 30 to 80 % and more preferably about 50 to 80 %.

The dose of the actinic irradiation and, more preferably, of the UV irradiation is, independently from the determination of the extent of consumption of the C-C double bonds in the ethylenically unsaturated or (meth)acrylic group or groups, respectively, selected so that the partially cured precursor exhibits a macroscopic cold flow behaviour. The cold flow is measured by the method of measurement specified in the experimental section below. The dose of the initial irradiation is preferably selected so that the partially cured precursor exhibits a percentage change in the diameter of a sample of the radiation-curable precursor of at least 20 %, preferably at least 25 % and especially preferably at least 30 % when measuring its cold flow (or flow resistance) according to the method described in the test section below after a dwell time of 3 days at 23°C.

After the initial irradiation step, a second substrate is applied to the first substrate bearing the partially cured precursor, and the second substrate is preferably pressed into contact with the first one. Subsequently, the precursor is subjected to further actinic irradiation and/or, in particular, UV irradiation to fully cure the precursor.

In the two-step or closed-face curing method described above, the precursor of the pressure-sensitive adhesive can alternatively also be applied onto the surfaces of both substrates.

In the closed-face curing method at least one of the substrates needs to be at least partially transparent for the actinic irradiation used for curing, that means, in particular, for UV irradiation so that the partially cured precursor can be further cured after assembling the substrates together. The degree of transparency for actinic irradiation and, in particular, UV irradiation depends on various parameters including the absorption coefficient of the respective material of the substrate, the thickness of the substrate and the spectral composition and intensity of the irradiation. The person skilled in the art will select these parameters and the material of at least one of the substrates so that the precursor is fully cured within less than 5 min, more preferably within less than 3 min and especially preferably within

less than 1 min. It was observed that as a rule of thumb the intensity of the actinic irradiation and, in particular, the UV irradiation after passing the at least partially transparent substrate, preferably is at least 60 % and more preferably at least 65 % with respect to the intensity of the impinging irradiation.

Suitable materials for use as a UV-transparent substrate include, for example, UV-transparent polymer materials such as polyolefin, polyester including polycarbonate, polyacrylate, polyurethane and glass.

In the closed-face curing method of the present invention both type I photoinitiators or type II photoinitiators/co-initiator systems may be used, and it is also possible to use a combination of type I photoinitiators and type II photoinitiators/co-initiator systems. The use of type I photoinitiators is preferred.

The closed-face curing method of the present invention tends to provide high performance adhesive bonds which are characterized by high static shear values and peel values of the assembly and in particular, by an advantageous behaviour at elevated temperatures. It is speculated by the present inventors that these advantageous properties of the pressure-sensitive adhesive bond may be supported by the bonding mechanism where the substrates are assembled while the precursor is only partially cured and exhibits a macroscopic flow behaviour which results in good wet-out properties. The advantageous temperature behaviour of the fully cured bond is believed to be supported by including poly(meth)acrylate functional oligomers and, optionally, monomers having two or more ethylenically unsaturated bonds and/or, optionally, monomers having one ethylenically unsaturated bond and a $T_G$ of 50°C or more, into the precursor of the adhesive of the present invention.

The closed-face curing method of the present invention thus provides assemblies the bonding of which exhibits advantageous properties and, in particular, a high temperature insensitivity. The fully cured precursor of the present invention preferably exhibits advantageous static shear values at elevated temperatures and shear adhesion failure temperatures of preferably at least 75 °C, more preferably of at least 80 °C and especially preferably of at least 100 °C.

The photoinitiator component (v) preferably comprises from 1-3 and more preferably 1 or 2 type I photoinitiator compounds and/or, depending of the curing method applied as was described above, 1-3 and more preferably 1-2 tape II photoinitiators and, preferably, suitable co-initiators. Component (v) does preferably not comprise any photoinitiator compounds other than free-radical photoinitiators.

In a preferred embodiment of the present invention, the precursor comprises

- 10-40 wt.% of one or more compounds of component (i),
- 15-35 wt.% of one or more compounds of component (ii),
- 5-15 wt.% of one or more compounds of component (iii) with a $T_G < 0$ °C, and 15-30 wt.% of one or more compounds of component (iii) with a $T_G > 50$ °C, and
- an effective amount of the photoinitiator component.

The fully cured precursor of this preferred embodiment tends to exhibit when used as a bond between two substrates obtained, e.g., by using the closed-face curing method described below, a highly advantageous high temperature behaviour.

The precursors of the present invention comprise (meth)acrylate functional oligomer components (i) and (ii) and ethylenically unsaturated monomer components (iii) and (iv) whereby compounds (iii) and (iv) can be considered as reactive diluents. By varying the amount of these components within the limits given in claim 1, it is possible to adjust the viscosity of the precursor so that it exhibits a dynamic viscosity at 20 °C and at a shear rate of 100 $s^{-1}$ of between 300 and 15,000 mPa·s.

Adjusting the dynamic viscosity within this range imparts printability to the precursor. A wide variety of printing methods including screen-printing, flexo-printing, gravure printing, offset printing or tampon printing can be used. Screen-printing is preferred. The person skilled in the art can easily adjust the printing parameters such as, for example, the mesh size of the printing screen in case of screen printing, in view of the viscosity value of a specific precursor.

The viscosity of the precursor can be further adjusted by including oligomeric or polymeric, respectively, non-reactive additives such as, for example, tackifiers including rosin esters, synthetic hydrocarbons and terpine resins and plasticizers. The amount of one or more tackifiers with respect to the mass of the precursor can be up to 50 wt %, more preferably up to 40 wt % and especially preferably between 0.5 - 35 wt %. It is also possible to include oligomeric or polymeric, respectively, additives comprising one or more photoactivatable groups. Oligomeric and polymeric, respectively, additives of this type are commercially available; exemplary additives which are to illustrate the present invention without limiting it include, for example, Regalite series partially hydrogenated synthetic hydrocarbons such as Regalite 5100, 7100 and 9100, or rosin ester Foral 105, all commercially available from Eastman Chemicals, Middleburg, The Netherlands. Oligomeric or polymeric additives, respectively, which are useful in the present invention, preferably exhibit a ball softening point of at least 50°C. The acrylic ester resin AC Resin 258, available from BASF, Ludwigshafen, Germany, is an example for a commercially available resin comprising a photoactivatable group.

The precursor of the present invention can comprise various additives such as, for example, defoaming agents, heat stabilizers, antioxidants, antistatic agents, thickeners, fillers, pigments, dyes, colorants, chain transfer

agents and thixotropic agents. The amount of such additives if present, is selected so that it does not adversely affect the properties of the precursor such as, for example, its viscosity and/or the properties of the pressure-sensitive adhesive obtained upon curing.

Preferred additives include defoaming agents which can be included in an amount of between 0.01 and 10 wt % and more preferably in an amount of between 0.05 and 5 wt % with respect to the mass of the precursor in order to reduce the time required for defoaming the printed precursor.

Another preferred additive includes fillers such as, for example, hydrophilic and/or hydrophobic fumed silica, respectively, which may be added in an amount of between 0.1 and 10 wt % and more preferably in an amount of between 0.5 and 5 wt % with respect to the mass of the precursor in order to adjust the viscosity of the precursor.

The precursor of the present invention is solvent-free, i.e. it does essentially not comprise any inert solvents such as, for example, methanol, acetone, dimethylsulfoxide, tetrahydronaphthalene, silanes or toluene. It is, however, possible though not preferred that the precursor comprises small amounts of one or more of such inert solvents of preferably less than 2 wt.% and more preferably of less than 1 wt.% with respect to the mass of the precursor in order to improve the wetting of the substrates.

The amount of the optional additive component comprising one or more additives preferably is between 0 wt. % and 20 wt % and more preferably between 0.1 and 15 wt % with respect to the mass of the precursor.

Above and below, percentages by weight refer to the total mass of the precursor unless indicated otherwise. The percentages by weight of the components (i)-(v) (to the extent they are present in a specific formulation), and, optionally, additives or other components of a precursor add up to 100 wt.%.

The present invention will now be further explained by the following examples which are to illustrate the invention without limiting it.

Prior to this, some test methods are described which will be used in the Examples. If not indicated otherwise, curing is effected in all Examples under ambient conditions.

## Materials employed in the Examples

*Reactive oligomers*

Monoacrylate functional polyester urethane oligomer, $M_w$ = 8,000, available as GENOMER 4188 from Rahn AG (Zurich, Switzerland), as a mixture of 80 % by weight monoacrylate functional polyester urethane acrylate oligomer and 20 % by weight 2-ethylhexylacrylate.

Diacrylate functional polyester urethane oligomer, Mw = 7,000, available as GENOMER 4269 from Rahn AG (Zurich, Switzerland), as a mixture of 80 % by weight diacrylate functional polyester urethane acrylate and 20 % by weight 2-acrylic acid 2-(((butylamino)carbonyl)oxy)ethyl ester (=GENOMER 1122, see below).

Acrylated oligo amine resin; co-initiator suitable for use with Esacure TZT, Mw = 10,000, available as GENOMER 5275 from Rahn AG (Zurich, Switzerland).

*Reactive Diluents*

EHA - 2-ethylhexylacrylate; $T_g$ of the corresponding homopolymer, -53 °C

Et-EtEA - ethoxy-ethoxyethylacrylate, available as Sartomer SR 256 from Cray Valley (Paris, France); $T_g$ of the corresponding homopolymer, -56°C,

HDDA - hexanediol diacrylate

2-Acrylic acid 2-(((butylamino)carbonyl)oxy)ethyl ester, available as GENOMER 1122 from Rahn AG (Zurich, Switzerland); $T_g$ of the corresponding homopolymer, + 13° C

ACMO - Acryloylmorpholine, available from Rahn AG (Zurich, CH). $T_g$ of the corresponding homopolymer, + 135° C,

*Photoinitiators*

Type 2 photoinitiator, comprising 80 wt % 2,4,6, trimethylbenzophenone and 20 wt% benzophenone, available as Esacure TZT from Lamberti SPA (Gallarate, Italy)

Acrylated oligo amine resin, Mw = 10,000, available as GENOMER 5275 from Rahn AG (Zurich, Switzerland);

co-initiator for Esacure TZT.

Type 1 photoinitiator, comprising 70 wt % poly [ 2, hydroxy-2-methyl-1- [4-(1-methylvinyl)phenyl]propan-1-one] and 30 wt % 2, hydroxy-2-methyl-1- phenyl-propan-1-one, available as Esacure KIP 100 from Lamberti SPA (Gallarate, Italy)

*Additives*

Byk 055 - silicone-free polymeric defoaming agent, available from BYK Chemie GmbH (Wesel, Germany).

Test methods

FOR THE UNCURED PRECURSOR OF THE PRESSURE-SENSITIVE ADHESIVE

*Viscosity (dynamic)*

Viscosity of the precursor of the pressure-sensitive adhesive as a function of shear rate was measured at 20°C using a cone and plate viscometer, commercially available as RHEOSTRESS RS75 from Thermo Haake, Karlsruhe, Germany. The dynamic viscosity was measured as a function of shear rate ($s^{-1}$) for both an upward scan (shear rate increasing with time) and a downward scan (shear rate decreasing with time). A linear scan rate of an increase (upward) or decrease (downward) of the shear rate over time of about (4.4 $s^{-1}$) $s^{-1}$ was applied. The viscosity value at a shear rate of 100 $sec^{-1}$ was taken to assess the rheological properties of the precursor of the pressure-sensitive adhesive. If the two curves obtained for the upward scan and the downward scan were different (thixotropic behaviour), the viscosity value at a shear rate of 100 $sec^{-1}$ was taken from the upward scan.

*Percent consumption of unsaturated C—C double bond*

The degree to which the unsaturated C—C double bonds in the (meth)acrylate functional groups of the oligomer components (i) and (ii) and the ethylenically unsaturated groups of the monomer components (iii) and (iv), respectively, were consumed during curing as a function of time was measured using Fourier Transform Infrared Spectroscopy techniques (FT IR). The signal originating from the C—C double bond of the ethylenically unsaturated group or groups of the monomer components (iii) and, optionally, (iv), usually dominates the signal originating from the C—C double bond of the (meth)acrylic group or groups of the oligomeric components (i) and (ii) because due to the distinctly smaller geometrical extension of the monomeric compounds of components (iii) and (iv) in comparison to that of the oligomeric compounds of components (i) and (ii), the number of the monomeric molecules per volume unit (i.e., concentration) and hence the number of the monomeric C—C double bonds per volume unit distinctly exceeds the number of the oligomeric molecules and hence the number of the oligomeric C—C double bonds per volume unit. Therefore, it is usually sufficient to monitor the extinction of the signal originating from the C—C double bond of the ethylenically unsaturated group or groups of the monomer components (iii) and, optionally, (iv). For the FTIR measurements, a layer of the precursor with a thickness of 30 µm was used.

If the ethylenically unsaturated group of the monomers of component (iii) and, optionally, (iv) is an acrylate group, the degree of consumption can be measured, for example, by measuring the extinction of the signal attributable to the unsaturated C—C double bond of the acrylate group at about 810 $cm^{-1}$ as a function of time.

The percent consumption was taken as the percentage of the double bonds that disappeared during irradiation whereby the value prior to irradiation was taken as 0 %.

The person skilled in the art can easily adjust this method when using monomers in components (iii) and (iv) having other ethyenically unsaturated groups such as, for example, methacrylic groups, vinyl or allyl groups. In this case, the signal of the C—C double bond to be monitored will be at a different wave number.

FOR PARTIALLY CURED ADHESIVE BONDS (AS OBTAINED IN STEP 1 OF THE CLOSED-FACE OR TWO-STEP CURING METHOD)

*Cold flow (flow resistance)*

A layer of the precursor of the pressure-sensitive adhesive of the present invention having a thickness of 50 µm, was coated on a release liner and partially cured using a dose of the actinic irradiation or, preferably, the UV-irradiation insufficient to fully cure the precursor. Then a second release liner was laminated onto the layer of the partially cured precursor.

A 48-mm diameter circular coupon of the partially cured precursor covered by the two release liners was die-cut and placed onto a flat surface of a substrate.

A weight of 500 g was placed on the coupon of the layer of the partially cured precursor between the release liners for 2 hours at 120 °C. The cold flow was then measured as a percentage change in the diameter of said coupon.

FOR CURED ADHESIVE BONDS (AS OBTAINED AFTER STEP 2 OF THE CLOSED-FACE OR TWO-STEP CURING METHOD

*T-peel at 23 °C*

Sample preparation:

Adhesive precursor was applied to a 175 µm thick polyester film using a knife coater to give a thickness of 50 µm and partially cured using a UV dryer available as Natograph Ltd - UV Dryer, Type 90-0220-T8, available from Natograph Ltd., Nothingham, UK, commonly employed for drying and curing of screen-printing inks. The polyester film, available as Melinex ST 726 from DuPont, was primed with an acrylate primer on both sides and used as received. The amount of energy incident on the layer of adhesive precursor was 200 $mJ/cm^2$ as measured using a available light measurement device commercially available as UVIMAP™ UM 365H S from Electronic Instrumentation and Technology (EIT) of Sterling VA/USA. The sample residence time under the lamps was ca. 1 second.

The layer of the partially cured precursor of the adhesive was then laminated to an additional polyester film (Melinex ST 726 as above).

The construction was irradiated a second time through the polyester film, using the same lamp equipment described above, to fully cure the adhesive. the amount of energy incident on the layer of adhesive precursor was 800 $mJ/cm^2$. The sample residence time under the lamps for the final curing step was ca. 2.5 seconds.

The construction thus prepared was conditioned at 23 °C and 50 % relative humidity for 24 hours. A T-peel adhesion test was then conducted according to the ASTM (American Society of Testing and Materials) Method D1876-61T using a tensile tester at a jaw separation speed of 305 mm/min. The force required to separate the two polyester sheets was recorded in N/cm. The test was repeated three times and the results averaged.

Static Shear (23 °C)

An adhesive bond between two polyethylene terephthalate (PET) films was prepared by the method described under T-Peel at 23 °C above. The laminate was conditioned at 23 °C and 50% relative humidity for 24 hours.

A static shear test was performed according to FINAT (Fédération Internationale des Fabricants et Transformateurs d'Adhésifs et Thermocollants sur Papiers et autres Supports, The Hague, Netherlands) Test Method 8 (1995). The test construction was prepared so that the bonded area tested was 2.54 cm x 1.27 cm. A load of 1 kg was applied to one of the polyester sheets and the time to bond failure was recorded in minutes. The test was repeated and the two results were averaged.

Static Shear (70°C)

Samples for the Static Shear Test at 70 °C were prepared by the same method as employed for the Static Shear Test at 23 °C.

The test itself was also performed in a similar manner with the exception that the shear stand and sample were conditioned in a forced air oven held at 70 °C for 30 minutes before the weight was applied. The measurement of static shear was also performed at 70 °C. Time to bond failure in minutes was recorded. The test was repeated and the two results were averaged.

Shear Adhesion Failure Temperature (SAFT), °C

An adhesive bond between two polyethylene terephthalate (PET) films was prepared by the method described under T-Peel at 23 °C above. The sample construction was prepared so that a bonded area of 2.54 cm x 1.27 cm was employed. The laminate was conditioned at 23 °C and 50 % relative humidity for 24 hours.

The shear station bearing the sample and a 500 g weight was placed in a forced air oven having a programmable temperature variation as a function of time. The oven was held at 25 °C for 10 minutes and then heated at a rate of 0.5 °C per minute to a temperature of 120 °C, representing a total heating time of 3 hrs and 10 min. The time, t, at which the adhesive bond failed and the weight dropped was recorded in minutes. The test was repeated and the two test results were averaged.

The shear adhesion failure temperature was calculated using the formula:

$$\text{SAFT in } ^\circ C = 0.5\ ^\circ C\ (t\text{-}10) + 25\ ^\circ C$$

Polyken™ Probe Tack Test

Adhesive precursors were coated on polyester film and fully cured in a one step process using UV exposure of 600 mJ/cm$^2$ from the UV radiation source described in Example 1.

The cured adhesive layer thus prepared was subjected to the Polyken™ Probe Tack Test (described in general in ASTM Spec. Publ. 360 (1963)) and specifically in Test Method ASTM D14 "Pressure Sensitive Tack of Adhesives Using an Inverted Probe Machine".

The polished stainless steel probe with a diameter of 5 mm was allowed to contact the sample surface for a period of 1 second with a force of 0.2 N. The force required to remove the probe from the sample surface at a rate of 1 cm/s was recorded in grams. The test was repeated twice and the three results averaged.

Examples

*Example 1*

An adhesive precursor was prepared by combining the components shown for Example 1 in Table 1. The amounts of the mono- and di-acrylate functional oligomers, respectively given in Table 1, were calculated from the respective amounts of GENOMER 4188 or 4269. Likewise, the amounts of the monomer EHA and 2-acrylic acid 2-(((acryl-amino) carbonyl) oxy) ethylester (= GENOMER 1122) contained in GENOMER 4188 and 4269, respectively, are included in the respective amounts given for such monomers.

Adhesive precursor was applied to175 μm polyester film using a knife-coater to give a thickness of 50 μm.

The adhesive precursor was first partially cured using UV dryer Natograph Ltd - UV Dryer, Type 90-0220-T8, available from Natograph Ltd., Nothingham, UK, commonly employed for drying and curing of screen-printing inks. The polyester film, available as Melinex ST 726 from DuPont, was primed with an acrylate primer on both sides and used as received. The amount of energy incident on the layer of adhesive precursor in the partial curing step was 200 mJ/cm$^2$ as measured using a light measurement device commercially available as UVIMAP™ UM 365H S from Electronic Instrumentation and Technology (EIT) of Sterling VA/USA. The sample residence time under the lamps for the partial curing step was ca. 1 second.

The layer of partially cured adhesive precursor was then laminated to an additional polyester film (Melinex ST 726 as above).

The layer of adhesive precursor was then irradiated a second time through the polyester film, using the same lamp equipment described above, to finally cure the adhesive. The amount of energy incident on the layer of adhesive precursor in the second curing step was 800 mJ/cm$^2$. In the second curing step, the sample residence time under the lamps was ca. 2.5 seconds.

Test results showing the properties of the adhesive bond thus formed are shown in Table 2. In particular, properties related to high temperature performance were good. Tests that reflect these properties are Static Shear at 70°C and Shear Adhesion Failure Temperature (SAFT).

*Examples 2-5*

Examples 2-5 were prepared and tested in the same manner as Example 1. The compositions of the adhesive precursors of Examples 2-5 are shown in Table 1. Higher levels of acryloylmorpholine (ACMO) were present (Ex. 2, 3 and 5) as well as substantial amounts of difunctional polyester urethane acrylate oligomer (Ex. 4 and 5). The amounts of the mono- and di-acrylate functional oligomers, respectively given in Table 1, were calculated from the respective amounts of GENOMER 4188 or 4269. Likewise, the amounts of the monomer EHA and 2-acrylic acid 2-(((acryl-amino) carbonyl) oxy) ethylester (= GENOMER 1122) contained in GENOMER 4188 and 4269, respectively, are included in the respective amounts given for such monomers.

The adhesive bond formed between two substrates was tested by the methods shown under Test Methods above. Results of the tests are shown in Table 2. Shear Adhesion Failure Tests on Examples 2-5 resulted in values all over 100 °C.

In separate experiments, the adhesive precursor compositions of the Examples 1-5 shown in Table 1 were applied to a 175 μm polyester (PET) film at a thickness of 50 μm and cured completely in a one-step process using 600 mJ/cm$^2$ from the UV radiation source described in Example 1. The exposed adhesive layers thus formed were tested to determine whether pressure-sensitive adhesive characteristics were present. None of the adhesive layers was tacky to the touch. Examples 1,2 and 4 showed very low tack as measured by the Polyken™ Probe Tack Test

described above under Test Methods. Results of the Probe Tack Test are shown in Table 2.

*Comparative Example 1*

An adhesive precursor having the composition shown under Comparative Example 1 in Table 1 was cured in a two step process under the conditions described in Example 1. The adhesive precursor comprised no difunctional polyester urethane acrylate oligomer and no acryloyl morpholine (ACMO), a monomer whose homopolymer has a high $T_G$. The amount of the monoacrylate functional oligomer, respectively given in Table 1, were calculated from the amount of GENOMER 4188. Likewise, the amount of the monomer EHA contained in GENOMER 4188, is included in the amount given for such monomer.

The Shear Adhesion Failure Temperature (SAFT) was measured as 58° C. Thus adhesive bonds formed from the adhesive precursor of Comparative Example 1 are substantially less suitable for high-temperature bonding applications as compared to Examples of the invention (Examples 1-5).

Table 1

| Component | Ex. 1 | Ex. 2 | Ex. 3 | Ex. 4 | Ex. 5 | Comp. Ex. 1 |
|---|---|---|---|---|---|---|
| | wt. % | wt. % | wt. % | wt. % | wt. % | wt. % |
| Monofunctional polyester urethane acrylate oligomer | 51.6 | 49.0 | 35.0 | 15.0 | 15.0 | 66.6 |
| Difunctional polyester urethane acrylate oligomer | 9.1 | 10.0 | 17.5 | 49.5 | 24.5 | -- |
| Acrylated oligo amine resin | 3.8 | 4.0 | 4.0 | 4.0 | 4.0 | 4.1 |
| 2-EHA | 12.9 | 10.5 | 10.0 | 10.0 | 10.0 | 21.3 |
| Et-et- EA | -- | -- | -- | 5.0 | 5.0 | 4.6 |
| ACMO (acryloylmorpholine) | 15.2 | 20.0 | 25.0 | -- | 25.0 | -- |
| Genomer 1122 | 2.3 | 2.5 | 4.4 | 12.0 | 6.0 | -- |
| TYPE 1, KIP 100 | 2.0 | 2.0 | 2.0 | 2.0 | 2.0 | 1.7 |
| TYPE 2, TZT | 2.0 | 2.0 | 2.0 | 2.0 | 2.0 | 1.7 |
| HDDA | -- | 0.1 | 0.1 | -- | -- | -- |
| Byk 55 | 1.1 | -- | -- | 0.5 | 0.5 | -- |
| Viscosity (mPa-s) at 100 $sec^{-1}$, mPa-s | 6,500 | 12,000 | 10,500 | 14,800 | 6,000 | 6,000 |

Table 2

| Ex. | T-peel, N/cm | Static Shear 23° C, min | Static shear 70° C, min | SAFT, °C | Polyken Probe Tack, g |
|---|---|---|---|---|---|
| 1 | 13.5 | > 10,000 | 7,000 | 80 | 160 |
| 2 | 15.8 | > 10,000 | > 10,000 | 115 | 100 |
| 3 | >19.8* | > 10,000 | > 10,000 | 120 | 0 |
| 4 | 8.9 | > 10,000 | 5,800 | 106 | 15 |
| 5 | >18.0* | > 10,000 | > 10,000 | 119 | 0 |
| C1 | 5.8 | 6,000 | -- | 58 | 720 |

* Polyester film breaks during the test

## Claims

1. Free-radically radiation-curable, solvent-free and printable precursor of an adhesive, the precursor comprising

   (i) 15-60 wt.% of one or more mono(meth)acrylate functional oligomer compounds at least one of said oligomer compounds comprising at least one urethane bond,

(ii) 5-85 wt.% of one or more poly(meth)acrylate functional oligomer compounds,

(iii) 5-45 wt.% of one or more monomer compounds comprising one ethylenically unsaturated group,

(iv) 0-10 wt.% of one or more monomer compounds comprising two or more ethylenically unsaturated groups, and

(v) an effective amount of one or more free radical photoinitiators,

wherein the percentages which are percentages by weight with respect to the mass of the precursor, are selected so that the precursor has a dynamic viscosity at 20 °C and at a shear rate of 100 $s^{-1}$ of between 300 to 15,000 mPa·s.

**2.** Precursor according to any preceding claim wherein the ratio of the mass of one or more mono(meth)acrylate functional oligomer compounds having at least one urethane unit to the mass of the monofunctional acrylate oligomer compounds of component (i) of the precursor, is between 60 and 100 %.

**3.** Precursor according to any preceding claim wherein the ratio of the mass of one or more poly(meth)acrylate functional oligomer compounds having at least one urethane unit to the mass of the monofunctional acrylate oligomer compounds of component (i) of the precursor, is between 60 and 100%.

**4.** Precursor according to any of the preceding claims wherein the average molecular weight of the mono(meth) acrylate functional oligomer compounds of component (i) is between 1,500 and 35,000.

**5.** Precursor according to any of the preceding claims wherein the glass transition temperature of a homopolymer obtained by polymerising the monofunctional acrylate oligomers having at least one urethane unit, is between -30 to 70 °C.

**6.** Precursor according to any preceding claim wherein the monomers of components (iii) comprise at least one monomer the homopolymerisate of which comprises a Tg of more than 50 °C, in an amount of between 5 to 35 wt.% with respect to the mass of the precursor.

**7.** Precursor according to claim 6 wherein said at least one monomer is selected from a group comprising N-vinylpyrrolidone, N-vinyl caprolactam, isobornyl acrylate, acryloylmorpholine, isobornylmethacrylate, phenoxyethylacrylate, phenoxyethylmethacrylate, methylmethacrylate and acrylamid.

**8.** Precursor according to any of the preceding claims wherein the UV-curable monomers of components (iii) and (iv) comprise at least one UV-curable monomer compound the homopolymerisate of which comprises a glass transition temperature Tg of less than 0 °C in an amount of 1 - 25 wt.% with respect to the mass of the precursor.

**9.** Precursor according to claim 6 wherein said at least one monomer is selected from as group comprising n-butyl acrylate, isobutyl acrylate, hexyl acrylate, 2-ethyl-hexylacrylate, isooctylacrylate, caprolactoneacrylate, isodecylacrylate, tridecylacrylate, lauryl methacrylate, methoxy-polyethylenglycol-monomethacrylate, laurylacrylate, tetrahydrofurfurylacrylate, ethioxy-ethoxyethylacrylate, ethoxylated-nonylacrylate.

**10.** Precursor according to any preceding claim which further comprises one or more additives selected from the group consisting of oligomeric or polymeric non-reactive additives such as tackifiers, oligomeric or polymeric additives having a photoactivatable group, defoaming agents, heat stabilizers, antioxidants, antistatic agents, thickeners, fillers, pigments, dyes, colorants, chain transfer agents and thixotropic agents.

**11.** Method of adhering a substrate being at least partially transparent to actinic irradiation and/or UV-irradiation to another substrate comprising the steps of

(i) applying the precursor according to claim 1 to one of the substrates,

(ii) subjecting the precursor to actinic irradiation and/or UV irradiation using a radiation dose so that the precursor is cured only partly,

(iii) interrupting the treatment with actinic and/or UV irradiation and assembling the two substrates against

each other with the partly cured precursor being sandwiched between the two substrates, and

(iv) subjecting the assembly to actinic and/or UV irradiation through the UV-transparent substrate using a radiation dose sufficiently high to fully cure the precursor.

**12.** Method according to claim 10 wherein the precursor is applied onto the substrate by printing.

**13.** Method according to any of claims 10-11 wherein the precursor is applied as a layer having a thickness of between 30 and 250 µm.

**14.** Method according to any of claims 10-12 wherein the curing of the precursor by exposure to actinic and/or UV irradiation is performed under ambient conditions.

**15.** Assembly comprising two substrates bonded by a fully cured precursor according to claim 1 having a shear adhesion failure temperature from stainless steel of at least 70 °C.

European Patent Office

# EUROPEAN SEARCH REPORT

Application Number
EP 02 01 3605

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 580 864 A (GEN ELECTRIC) 3 December 1980 (1980-12-03) * page 1, line 19 - page 2, line 23 * * page 2, line 27 - line 31 * * page 3, line 14 - line 16 * * examples 5,6 * * claims 1-6 * | 1,3,6,7, 9 | C09J4/06 C08F290/06 C09J175/16 C08G18/28 |
| Y | idem. (with GB2283748) | 1,3,4, 7-12,14 | |
| Y | idem. (with DE19853813) ---- | 10,11 | |
| Y | GB 2 283 748 A (ABLESTIK LAB) 17 May 1995 (1995-05-17) * whole document * ---- | 1,3,4, 7-12,14 | |
| Y | DE 198 53 813 A (HENKEL KGAA) 17 June 1999 (1999-06-17) * column 2, line 41 - column 3, line 37 * * column 4, line 13 - line 41 * * column 7, line 2 - column 11, line 42 * * column 12, line 12 - line 30 * * column 14, line 28 - line 63 * * column 15, line 50 - column 16, line 17 * * column 17, line 29 - line 68 * * claims 1,2,4-7,9 * | 10,11 | TECHNICAL FIELDS SEARCHED (Int.Cl.7) C09J C08F C08G |
| A | idem. ----- | 1,15 | |

The present search report has been drawn up for all claims

| Place of search | Date of completion of the search | Examiner |
|---|---|---|
| THE HAGUE | 8 November 2002 | Bettels, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT ON EUROPEAN PATENT APPLICATION NO. EP 02 01 3605

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2002

| Patent document cited in search report | Publication date | Patent family member(s) | Publication date |
|---|---|---|---|
| GB 1580864 A | 03-12-1980 | BE 855659 A1 | 14-12-1977 |
| | | DE 2727109 A1 | 29-12-1977 |
| | | JP 53000285 A | 05-01-1978 |
| | | JP 55046646 B | 25-11-1980 |
| | | NL 7706874 A ,B, | 28-12-1977 |
| GB 2283748 A | 17-05-1995 | US 5475038 A | 12-12-1995 |
| | | CA 2129939 A1 | 12-02-1995 |
| | | IT 1266195 B1 | 23-12-1996 |
| DE 19853813 A | 17-06-1999 | DE 19853813 A1 | 17-06-1999 |
| | | BR 9813544 A | 10-10-2000 |
| | | CA 2313148 A1 | 17-06-1999 |
| | | WO 9929754 A1 | 17-06-1999 |
| | | EP 1037934 A1 | 27-09-2000 |
| | | HU 0004585 A2 | 28-04-2001 |
| | | JP 2001525467 T | 11-12-2001 |
| | | PL 341052 A1 | 26-03-2001 |
| | | TR 200001675 T2 | 21-11-2000 |

EPO FORM P0459

For more details about this annex : see Official Journal of the European Patent Office, No. 12/82